# EUROPÄISCHE PATENTSCHRIFT

(11) **EP 0 726 419 B1**
(45) Veröffentlichungstag und Bekanntmachung des Hinweises auf die Patenterteilung: **10.05.2000**
(21) Anmeldenummer: 96101463.6
(22) Anmeldetag: 02.02.1996
(51) Int. Cl.: F16L 41/04, F16L 41/06, B23B 41/08

(54) **Anbohrarmatur**
Fitting for tapping pipe walls
Appareil de perçage

(30) Priorität: 13.02.1995 DE 19504698
(43) Veröffentlichungstag der Anmeldung: 14.08.1996
(73) Patentinhaber: Friatec Aktiengesellschaft, 68229 Mannheim (DE)
(72) Erfinder: Willner, Wilfried, Dr., D-68229 Mannheim (DE); Freidel, Norbert, D-68753 Waghäusel (DE)
(74) Vertreter: Schmitt, Meinrad, Dipl.-Ing.

(56) Entgegenhaltungen:
- DE-A- 2 828 010
- DE-C- 3 830 395
- GB-A- 1 456 877
- GB-A- 2 083 151

## Beschreibung

Die Erfindung bezieht sich auf eine Anbohrarmatur gemäß den im Oberbegriff des Patentanspruchs 1 angegebenen Merkmalen.

Aus der DE-A-28 28 010 ist eine derartige Anbohrarmatur bekannt, mittels welcher Metallrohre miteinander verbindbar sind. Die Anbohrarmatur enthält einen Anbohrstutzen für einen Bohrer zum Anbohren des Rohres sowie einen Abgangsstutzen zum Anschluß einer Abgangsleitung, wobei zwischen den Anbohrstutzen und dem Abgangsstutzen ein Verbindungsstück mit einem Strömungskanal vorgesehen ist. Der Strömungskanal ist vollständig innerhalb des Verbindungsstücks angeordnet, so daß die Anbohrarmatur in radialer Richtung, bezogen auf die Rohrlängsachse, eine relativ große Bauhöhe aufweist. Die Anbohrarmatur ist mittels Zugstangen, zweckmäßig unter Verwendung geeigneter Dichtungen, auf der Außenfläche des Rohres festgespannt. Nach dem Anbohren des Rohres kann das im Rohr strömende Medium teilweise durch das Bohrloch ausströmen und über den Abgangsstutzen in die genannte Abzweigleitung strömen. Da das Rohr mit der Anbohrarmatur regelmäßig im Erdreich verlegt ist, muß mit zusätzlichen Maßnahmen Sorge dafür getragen werden, daß für die lange Lebensdauer derartiger Rohrleitungen von vielen Jahren die funktionssichere Verbindung gewährleistet ist.

Ferner ist aus der DE-C- 38 30 395 eine Anbohrarmatur aus Kunststoff bekannt, welche mit einem Kunststoffrohr durch Schweißen verbindbar ist. Die Anbohrarmatur enthält einen Stutzen, durch welchen hindurch ein Bohrer betätigbar ist, um das Rohr anzubohren. Der Anbohrstutzen mit dem Bohrer ist im wesentlichen orthogonal zur Längsachse des Rohres angeordnet, und ferner ist ein Abgangsstutzen vorgesehen, an welchen eine Abgangsleitung anschließbar ist. Der Abgangsstutzen ist quer zur Achse des Anbohrstutzens angeordnet, wobei die Anbohrarmatur eine vergleichsweise große Bauhöhe aufweist. Der Stutzen ragt vertikal nach oben in einer relativ großen Länge über die Rohraußenfläche hinaus. Das Rohr muß daher aus Sicherheitsgründen vergleichsweise tief im Erdboden verlegt werden, wodurch ein erheblicher Aufwand und entsprechende Verlegungskosten bedingt sind. Ferner erfolgen in den Übergängen von Rohr, Anbohrstutzen und Abgangsstutzen Umlenkungen des Strömungsmediums auf kürzestem Wege um 90°, wobei ungünstige Strömungsverhältnisse mit Verwirbelungen und dergleichen im Übergangsbereich auftreten können.

Hiervon ausgehend liegt der Erfindung die Aufgabe zugrunde, die Anbohrarmatur der genannten Art mit geringem konstruktiven Aufwand dahingehend weiterzubilden, daß eine Reduzierung der Bauhöhe erreicht wird. Die Anbohrarmatur soll zusammen mit der Rohrleitung in einfacher und kostengünstiger Weise verlegt werden können. Ferner sollen die Strömungsbedingungen für das aus der Rohrleitung in den Abgangsstutzen strömende Medium verbessert werden.

Die Lösung dieser Aufgabe erfolgt gemäß den kennzeichnenden Merkmalen des Patentanspruchs 1.

Die vorgeschlagene Anbohrarmatur zeichnet sich durch eine einfache und funktionssichere Konstruktion aus. Zwischen dem Anbohrstutzen und dem Abgangsstutzen ist ein Verbindungsstück mit einem Strömungskanal vorgesehen. Dieser Strömungskanal ist als eine Vertiefung in der Innenfläche, insbesondere des Stattelstücks, der Anbohrarmatur ausgebildet. Der Anbohrstutzen und der Abgangsstutzen liegen in Längsrichtung des Rohres gesehen nebeneinander und der Abstand zwischen dem Anbohrstutzen und dem Abgangsstutzen ist unter Berücksichtigung der Wandstärke der an den Abgangsstutzen anzuschließenden Leitung vorgegeben. Der Strömungskanal ist in der Innenfläche der Anbohrarmatur, und zwar vorzugsweise in der Innenfläche eines Sattelstücks desselben, in dem Bereich angeordnet, welcher von der Heizwicklung umgeben ist. Nach dem Verschweißen der Anbohrarmatur mit dem Rohr gewährleistet somit die mittels der Heizwicklung hergestellte und den genannten Bereich umgebende Heizzone eine funktionssichere Abdichtung nach außen. In den genannten von der Heizwicklung bzw. der Heizzone umgebenen inneren Bereich münden die inneren Hohlräume des Anbohrstutzens und des Abgangsstutzens, wobei zwischen den genannten Hohlräumen die Vertiefung mit dem Steuerungskanal gleichfalls angeordnet ist. Der als Vertiefung ausgebildete Strömungskanal wird nach dem Aufschweißen der Anbohrarmatur auf das Rohr durch deren Außenfläche vervollständigt bzw. abgeschlossen, und mittels der Schweißzone ist eine funktionssichere und druckfeste Abdichtung gewährleistet.

In zweckmäßiger Weise wird die Anbohrarmatur derart angeordnet, daß der Anbohrstutzen sowie der Abgangsstutzen im wesentlichen horizontal ausgerichtet sind. Insbesondere der Anbohrstutzen steht also nicht mehr vertikal nach oben über das Rohr praktisch ungeschützt hinaus, sondern liegt mit dem Rohr im wesentlichen in der gleichen horizontalen Ebene. Auch der Abgangsstutzen liegt in der gleichen horizontalen Ebene. Insgesamt braucht daher das Rohr nicht mehr so tief wie bisher im Erdboden verlegt werden, so daß bei der Verlegung der Aufwand zum Ausschachten eines Kanals nicht unwesentlich reduziert ist. Die Gefahr von Beschädigungen, insbesondere bei Baumaßnahmen durch Bagger oder dergleichen wird durch die horizontale Ausrichtung von Anbohrstutzen und Abgangsstutzen vermindert und die Sicherheit erhöht.

Um gute Strömungsbedingungen zu erhalten wird der Abgangsstutzen zweckmäßig in Strömungsrichtung nach dem Anbohrstutzen angeordnet. Mittels vorzugsweise schräg angeordneten Leitflächen im Übergangsbereich zwischen dem Strömungskanal und dem Abgangsstutzen werden die Strömungsbedingungen weiter verbessert. Der Strömungskanal verläuft im wesentlichen parallel zur Längsachse des Rohres und ermöglicht eine hinreichende Beruhigung des aus dem Rohr in den Strömungskanal eingeströmten Mediums.

Besondere Ausgestaltungen und Weiterbildungen der Erfindung sind in den Unteransprüchen sowie der weiteren Beschreibung angegeben.

Die Erfindung wird nachfolgend anhand des in der Zeichnung dargestellten Ausführungsbeispiels näher erläutert. Es zeigt:
- Fig. 1: einen axialen Schnitt durch die Anbohrarmatur in einer horizontalen Ebene,
- Fig. 2: eine Ansicht der Anbohrarmatur in Blickrichtung II gemäß Figur 1.

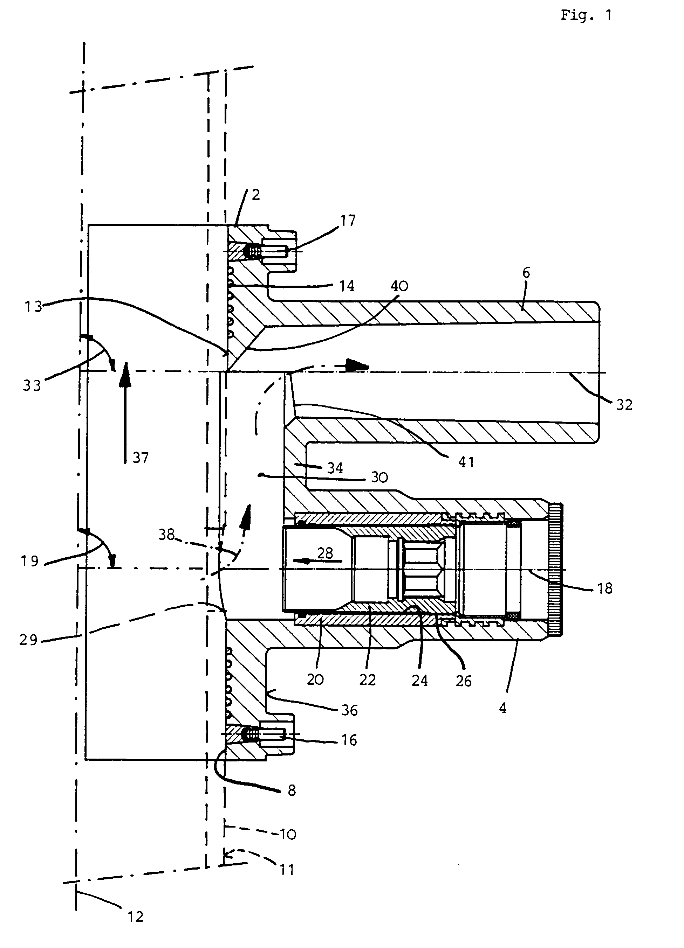

Fig. 1 zeigt einen Schnitt durch die einteilige Anbohrarmatur, welche als Sattelstück 2 mit einem Anbohrstutzen 4 sowie einem Abgangsstutzen 6 ausgebildet ist. Das Sattelstück 2 besitzt eine Innenfläche 8, welche außen auf ein hier teilweise und strichpunktiert angedeutetes Rohr 10 aufgelegt werden kann. Das Rohr 10 erstreckt sich in Richtung einer Längsachse 12 und das Sattelstück 2 kann mit einer hier nicht weiter dargestellten Schelle oder dergleichen mechanisch in bekannter Weise auf der Außenfläche 11 des Rohres 10 befestigt werden. Zur dichten Verbindung der Anbohrarmatur mit dem Rohr 10 ist ein Bereich 13 der Innenfläche 8 des Sattelstücks 2 in bekannter Weise von einer Heizwicklung 14 umgeben, deren Enden mit Kontakten 16, 17 verbunden sind. An die Kontakte 16, 17 ist über geeignete elektrische Leitungen ein Schweißtransformator anschließbar, um die Heizwicklung 14 mit Spannung zu beaufschlagen und so eine dichte Schweißverbindung des Sattelstücks 2 auf dem Rohr 10 in bekannter Weise zu erhalten. Die beim Schweißen erzeugte und den Bereich 13 umgebende Schweißzone, deren Lage und Ausbildung maßgeblich von der Heizwicklung vorgegeben ist, bildet eine sichere Abdichtung des genannten inneren Bereiches 13 nach außen.

Der Anbohrstutzen 4 ist mit seiner Stutzenachse 18 im wesentlichen orthogonal zur Längsachse 12 des Rohres 10 angeordnet. Im Inneren des Anbohrstutzens 4 ist eine Hülse 20 verankert, welche zur Aufnahme eines Bohrers 22 vorgesehen ist. Die Anbohrarmatur mit Stattelstück 2 und integral angeformtem Anbohrstutzen 4 sowie Abgangsstutzen 6 besteht aus schweißbarem Kunststoff, während die Hülse 20 und der Bohrer 22 aus Metall bestehen. Die Hülse 20 weist ein Innengewinde 24 auf, in welches ein Außengewinde 26 des Bohrers 22 eingreift. Durch Drehen des Bohrers 22 um die Stutzenachse 18 kann der Bohrer 22 in Richtung des Pfeiles 28 bewegt werden, um die Wand des Rohres 10 zu durchbohren. Nach dem Anbohren des Rohres 10 wird der Bohrer 22 durch gegenläufiges Drehen in die dargestellte Position zurückgedreht. Es sei ausdrücklich darauf hingewiesen, daß die Heizwicklung 14 in der Innenfläche 8 des Sattelstücks 2 derart angeordnet ist, daß sie außerhalb des Bohrloches 29 sowie des nachfolgend noch zu erläuternden Strömungskanals 30 liegt und die Schweißzone somit eine funktionssichere Abdichtung nach außen gewährleistet.

Der Abgangsstutzen 6 weist eine Abgangsachse 32 auf, welche ebenso wie die Stutzenachse 18 des Anbohrstutzens 4 in einem Winkel 33 orthogonal zur Längsachse 12 des Rohres 10 verläuft. Der Abgangsstutzen 6 ist im wesentlichen parallel zum Anbohrstutzen 4 angeordnet, wobei über dem Strömungskanal 30 die Verbindung zwischen dem Anbohrstutzen 4 und dem Abgangsstutzen 30 hergestellt ist. Der Strömungskanal 30 liegt innerhalb eines Verbindungsstücks 34, welches zwischen dem Anbohrstutzen 4 und dem Abgangsstutzen 6 im Bereich der Außenfläche 36 des Sattelstücks 2 vorhanden ist. Der Strömungskanal 30 ist als Vertiefung im inneren Bereich 13 der Innenfläche 8 des Sattelstücks 2 ausgebildet. Nach dem Anbohren des Rohres 2 kann durch die hierbei hergestellte Durchgangsbohrung 29 das Medium zunächst in Richtung der Stutzenachse 18 radial nach außen strömen und wird dann gemäß dem strichpunktierten Pfeil 38 in den Strömungskanal 30 umgelenkt. Es ist von besonderer Bedeutung, den Abgangsstutzen 6 derart anzuordnen, daß er in Strömungsrichtung 37 des durch das Rohr 10 strömenden Mediums nach dem Anbohrstutzen 4 angeordnet ist. Hierdurch werden besonders günstige Strömungsverhältnisse gewährleistet, zumal der Strömungskanal im wesentlichen parallel zur Strömungsrichtung 37 bzw. der Längsachse 12 verläuft.

Der Strömungskanal 30 wird radial nach innen zur Längsachse 12 des Rohres 10 durch dessen Außenfläche begrenzt. Aus dem Strömungskanal 30 gelangt das Medium in den Abgangsstutzen 6, wobei in zweckmäßiger Weise Leitflächen 40, 41 im Übergangsbereich vorhanden sind. Diese Leitflächen 40, 41 verlaufen schräg unter vorgegebenen Winkeln zur Abgangsachse 32. Die Leitflächen 40, 41 enden zweckmäßig im Bereich einer durch die Abgangsachse 32 verlaufenden Radialebene, welche im wesentlichen orthogonal zur Längsachse 10 und gemäß Fig. 1 senkrecht zur Zeichenebene steht. Die Querschnittsfläche des Strömungskanals 30 kann problemlos den Erfordernissen entsprechend vorgegeben werden und insgesamt wird ein sehr günstiger Strömungsverlauf aus dem Inneren des Rohres 10 zur Abgangsleitung erreicht. Der Strömungskanal 30 ist innerhalb eines Bereiches der Innenfläche 8 angeordnet, welcher von der Heizwicklung 14 umgeben ist. In diesen von der Heizwicklung 14 umgebenen Bereich münden ferner die inneren Hohlräume des Anbohrstutzens 4 sowie des Abgangsstutzens 6. Der Strömungskanal sowie die Mündungen des Anbohrstutzens und des Abgangsstutzens werden gemeinsam mittels der Heizwicklung 14 nach außen abgedichtet.

Es hat sich als besonders zweckmäßig erwiesen, das Sattelstück 2 derart anzuordnen, daß der Anbohrstutzen 4 sowie der parallele Abgangsstutzen 6 im wesentlichen horizontal angeordnet sind. Der Anbohrstutzen 4 und der Abgangsstutzen 6 stehen also nicht vertikal nach oben vom Rohr 10 ab, sondern erstrecken sich seitlich vom Rohr. Der Bohrer kann problemlos, beispielsweise mit einer einfachen Ratsche, deren Hebel vertikal nach oben, also nach vorn aus der Zeichenebene heraus beispielsweise gerichtet ist, betätigt werden. Aufgrund der seitlichen Anordnung von Anbohrstutzen 4 und Abgangsstutzen 6 kann die Verlegungstiefe für das Rohr 10 gegenüber bekannten Anbohrarmaturen nicht unwesentlich verringert werden.

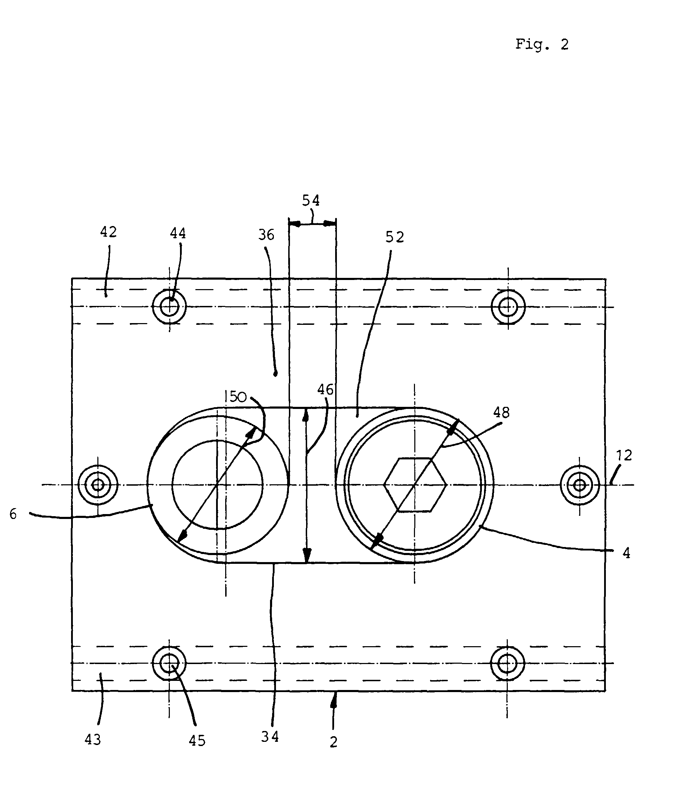

Fig. 2 zeigt eine seitliche Ansicht der Anbohrarmatur, wobei hier ferner zwei sich parallel zur Längsachse 12 erstreckende Flansche 42, 43 zu erkennen sind. Die Flansche 42, 43 stehen im wesentlichen radial von der zur Längsachse 12 im wesentlichen koaxialen Außenfläche 36 ab. Die Flansche 42, 43 enthalten jeweils zwei Ausnehmungen 44, 45 für hier nicht weiter dargestellte Schrauben, welche die Verbindung mit einem gleichfalls von der anderen Seite auf das Rohr aufgesetzten Schelle ermöglichen. Das zwischen dem Anbohrstutzen 4 und dem Abgangsstutzen 6 erfindungsgemäß vorgesehene Verbindungsstück 34 steht über die Außenfläche 36 des Sattelstücks 2 in einer vorgegebenen Höhe vor. Durch Vorgabe dieser Höhe kann problemlos der erforderliche Querschnitt für den Strömungskanal vorgegeben werden, um Druckverluste und/oder Verwirbelungen zu reduzieren und möglichst zu verhindern. Das Verbindungsstück 34 besitzt eine Breite 46, welche im wesentlichen gleich groß ist wie der Außendurchmesser des Anbohrstutzens 4 und/oder der Außendurchmesser 50 des Abgangsstutzens 6. Aufgrund dieser Geometrie wird eine hohe Stabilität und Funktionssicherheit gewährleistet. Ferner wird die Herstellung der Anbohrarmatur mit einfachen Werkzeugformen ermöglicht.

Das Verbindungsstück 34 besitzt eine äußere Oberfläche 52, welche sich in der dargestellten Weise zwischen dem Anbohrstutzen 4 und dem Abgangsstutzen 6 erstreckt. Am radial innenliegenden Ende der Stutzen 4, 6 besitzt das Verbindungsstück 4 und/oder dessen äußere Oberfläche 52 eine vorgegebene Länge 54. Diese Mindestlänge 54 ist unter Berücksichtigung der Wanddicke der an den Abgangsstutzen 6 anzuschließenden Rohrleitung derart vorgegeben, daß diese mit ihrem axialen Ende an der Oberfläche 52 des Verbindungsstücks 34 zur Anlage bringbar ist. Die Oberfläche 52 und somit die axiale Stirnfläche der anzuschließenden Rohrleitung liegen somit möglichst nahe der Längsachse 12 des Rohres, mit welchem die Anbohrarmatur in der oben erläuterten Weise durch Schweißen verbindbar ist. Die radiale Länge des Abgangsstutzens 6, und zwar bezogen auf die Längsachse 12 des Rohres, kann daher auf ein Minimum reduziert werden.

Alternativ zu der oben erläuterten Ausführungsform, gemäß welcher der Anbohrstutzen und der Abgangsstutzen parallel zueinander angeordnet sind, also zur Längsachse orthogonal ausgerichtet sind, können im Rahmen der Erfindung die genannten Stutzen auch eine andere Ausrichtung bezüglich der Längsachse und zueinander aufweisen. So kann der gemäß Figur 1 als rechter Winkel dargestellte Winkel 19 zwischen der Längsachse 12 und der Stutzenachse 18 um einen vorgegebenen Betrag kleiner als 90° sein und insbesondere zwischen 60 und 90 Winkelgrad betragen. Auch der Winkel 33 kann den Erfordernissen entsprechend kleiner oder auch größer als 90° vorgegeben werden. Durch diese Verkleinerung der Winkel 33 und/oder 19 werden die Strömungsbedingungen weiter optimiert, da das Medium vom Strömungskanal 30 in den Abgangsstutzen 6 um einen kleineren Winkel als 90° abzulenken ist. Von Bedeutung ist hierbei, daß der Winkel 33 zwischen der Abgangsachse 12 und dem Teil der Längsachse gemessen wird, welcher in Strömungsrichtung hinter der Abgangsachse 32 liegt. Wichtig ist jedoch für alle Ausführungsformen, daß zwischen dem Anbohrstutzen 4 und dem Abgangsstutzen 6 ein hinreichend großer Abstand eingehalten ist, damit die axiale Stirnfläche der an den Abgangsstutzen 6 anzuschließenden Rohrleitung bis an die Oberfläche 52 des Verbindungsstücks 34 herangeführt und zur Anlage gebracht werden kann.

Bei dem anhand von Fig. 1 und 2 eingangs erläuterten Ausführungsbeispiel sind der Anbohrstutzen 4 und der Abgangsstutzen 6 in der gleichen Axialebene angeordnet, durch welche die Längsachse 12 verläuft und welche vorzugsweise horizontal ausgerichtet wird. Alternativ können aber im Rahmen der Erfindung die Stutzen 4, 6 bzw. die Stutzenachsen 18, 32 in unterschiedlichen Axialebenen angeordnet sein. Auch für derartige Ausführungsformen ist es von besonderer Bedeutung, daß eine vorgegebene Mindestlänge 54 der Oberfläche 52 im Übergangsbereich der einander zugewandten Außenflächen der Stutzen 4, 6 in die Oberfläche 52 aus den oben erläuterten Gründen vorhanden ist. Bei einer solchen Ausführungsform verläuft der Strömungskanal 30 nicht mehr exakt parallel zur Längsachse 12, sondern bei radialer Projektion in Richtung auf die Längsachse 12 betrachtet, in einem vorgegebenen Winkel zur Längsachse 12.

So kann beispielsweise gemäß Fig. 1 der Anbohrstutzen 4 aus der Zeichenebene nach vorn herausgedreht sein und einen vorgegebenen Winkel zur Zeichenebene bzw. zu der Ebene aufweisen, in welcher sowohl die Längsachse 12 als auch die Abgangsachse 32 liegen. Dieser vorgegebene Versatzwinkel der Ebenen der Achsen 18 und 32 liegt zweckmäßig im Bereich zwischen 0 und 40 Winkelgrad. Wird die Anbohrarmatur derart montiert, daß der Abgangsstutzen 6 bzw. die Abgangsachse 32 im wesentlichen horizontal verlaufen, so ragt dann der Anbohrstutzen 4 in einem Winkel bis zu 40° bezogen auf die Horizontalebene nach oben. Aufgrund eines derart vorgegebenen Versatzwinkels können sich weitere Erleichterungen beim Anbohren des Rohres 10 ergeben, da die Anbohrwerkzeuge schräg von oben angesetzt und betätigt werden müssen. Bei derartigen bevorzugten Ausführungsformen mit einem Versatzwinkel zwischen dem Abgangsstutzen und dem Anbohrstutzen wird zweckmäßig darauf geachtet, daß das radial nach außen abstehende, freie Ende des Anbohrstutzens 4 diejenige Horizontalebene möglichst nicht schneidet, in welcher die Oberkante des Rohres 10 verläuft. Die Gefahr eines Abreißens des Anbohrstutzens bei Durchführung von Baumaßnahmen ist trotz vereinfachter Zugänglichkeit auf eine Minimum reduziert.

### Bezugszeichen

- 2: Sattelstück
- 4: Anbohrstutzen
- 6: Abgangsstutzen
- 8: Innenfläche von 2
- 10: Rohr
- 11: Außenfläche von 10
- 12: Längsachse von 2 oder 10
- 13: Bereich
- 14: Heizwicklung
- 16, 17: Kontakt
- 18: Stutzenachse
- 19: Winkel
- 20: Hülse
- 22: Bohrer
- 24: Innengewinde von 20
- 26: Außengewinde von 22
- 28: Pfeil
- 29: Bohrloch
- 30: Strömungskanal
- 32: Abgangsachse
- 33: Winkel
- 34: Verbindungsstück
- 36: Außenfläche von 2
- 37: Strömungsrichtung
- 38: Pfeil
- 40, 41: Leitfläche
- 42, 43: Flansch
- 44, 45: Bohrung
- 46: Breite von 34
- 48: Außendurchmesser von 4
- 50: Außendurchmesser von 6
- 52: Oberfläche
- 54: Länge

## Patentansprüche

1. Anbohrarmatur, welche mit einem Rohr (10) verbindbar ist, enthaltend einen Anbohrstutzen (4) für einen Bohrer (22) zum Anbohren des Rohres (10), einen Abgangsstutzen (6) zum Anschluß einer Abgangsleitung, und ferner zwischen dem Anbohrstutzen (4) und dem Abgangsstutzen (6) ein Verbindungsstück (34) mit einem Strömungskanal (30), wobei der Strömungskanal (30) zumindest näherungsweise oder zumindest teilweise parallel zu einer Längsachse (12) angeordnet ist, welche nach dem Verbinden mit dem Rohr (10) zumindest näherungsweise mit der Rohrlängsachse übereinstimmt, dadurch gekennzeichnet, daß der Strömungskanal (30) als Vertiefung im Bereich der Innenfläche (8) der Anbohrarmatur ausgebildet ist und nach dem Verbinden der Anbohrarmatur mit dem Rohr (10) radial innen zumindest teilweise von der Außenfläche des Rohres (10) begrenzt wird und daß der Strömungskanal (30), innerhalb einer Heizwicklung (14) angeordnet ist, mittels welcher die Anbohrarmatur auf der Außenfläche (11) des Rohres (10) verschweißbar ist.

2. Anbohrarmatur nach Anspruch 1, dadurch gekennzeichnet, daß die Stutzenachse (18) des Anbohrstutzens (4) und die Abgangsachse (32) des Abgangsstutzens (6) in axialer Richtung einen vorgegebenen Abstand zueinander aufweisen.

3. Anbohrarmatur nach Anspruch 1 oder 2, dadurch gekennzeichnet, daß der Anbohrstutzen (4) und der Abgangsstutzen (6) mit Ihren Achsen (18,32) im wesentlichen parallel zueinander angeordnet sind.

4. Anbohrarmatur nach Anspruch 1 oder 2, dadurch gekennzeichnet, daß die Stutzenachse (18) des Anbohrstutzens (4) und die Abgangsachse (32) des Abgangsstutzens (6) im wesentlichen in der gleichen, vorzugsweise horizontalen, Ebene angeordnet sind.

5. Anbohrarmatur nach einem der Ansprüche 1 bis 4, dadurch gekennzeichnet, daß die inneren Hohlräume des Abgangsstutzens (6) sowie des Anbohrstutzens (4) in den Strömungskanal (30) münden und ebenso wie der Strömungskanal (30) von der Heizwicklung (14) umgeben sind.

6. Anbohrarmatur nach einem der Ansprüche 1 bis 5, dadurch gekennzeichnet, daß in Strömungsrichtung (37) des durch das Rohr (10) strömenden Mediums der Abgangsstutzen (6) hinter dem Anbohrstutzen (4) angeordnet ist.

7. Anbohrarmatur nach einem der Ansprüche 1 bis 6, dadurch gekennzeichnet, daß zwischen den einander zugewandten Außenflächen des Anbohrstutzens (4) und des Abgangsstutzens (6) im Übergangsbereich zur äußeren Oberfläche (52) des Verbindungsstücks (34) ein Abstand mit vorgegebener Länge (54) vorhanden ist, welche bevorzugt derart vorgegeben ist, daß die mit dem Abgangsstutzen (6) verbindbare Abgangsleitung mit ihrer axialen Stirnfläche an der äußeren Oberfläche (52) des Verbindungsstücks (34) zur Anlage bringbar ist.

8. Anbohrarmatur nach einem der Ansprüche 1 bis 7, dadurch gekennzeichnet, daß im Übergangsbereich zwischen dem vorzugsweise axial verlaufenden Strömungskanal (30) und dem Abgangsstutzen (6) wenigstens eine Leitfläche (40, 41) angeordnet ist, welche unter einem vorgegebenen Winkel und/oder schräg zur Abgangsachse (32) angeordnet ist.

9. Anbohrarmatur nach einem der Ansprüche 1 bis 8, dadurch gekennzeichnet, daß das Verbindungsstück (34) im Bereich der Außenfläche (36) der Anbohrarmatur und/oder des Sattelstücks (2) eine Breite (46) aufweist, welche zumindest näherungsweise gleich groß ist wie der Außendurchmesser (48) des Anbohrstutzens (4) und/oder der Außendurchmesser (50) des Abgangsstutzens (6), wobei die Breite (46) quer zur Längsachse (10) gemessen ist.

## Claims

1. A tapping fitting which may be connected to a pipe (10), containing a tapping socket (4) for a drill (22) for tapping the pipe (10), an exit socket (6) for attaching an exit line, and furthermore between the tapping socket (4) and the exit socket (6) a connecting piece (34) having a flow channel (30), the flow channel (30) being arranged at least approximately or at least partially parallel to a longitudinal axis (12) which corresponds at least approximately to the longitudinal axis of the pipe after connection to the pipe (10) has taken place, characterized in that the flow channel (30) is constructed as a depression in the region of the internal face (8) of the tapping fitting and is delimited radially inwardly at least partially by the external face of the pipe (10) after the tapping fitting has been connected to the pipe (10), and in that the flow channel (30) is arranged within a heating coil (14) by means of which the tapping fitting may be welded to the external face (11) of the pipe (10) .

2. A tapping fitting according to Claim 1, characterized in that the socket axis (18) of the tapping socket (4) and the exit axis (32) of the exit socket (6) are at a predetermined spacing from one another in the axial direction.

3. A tapping fitting according to Claim 1 or 2, characterized in that the tapping socket (4) and the exit socket (6) are arranged such that their axes (18, 32) are substantially parallel to one another.

4. A tapping fitting according to Claim 1 or 2, characterized in that the socket axis (18) of the tapping socket (4) and the exit axis (32) of the exit socket (6) are arranged substantially in the same, preferably horizontal, plane.

5. A tapping fitting according to one of Claims 1 to 4, characterized in that the inner cavities in the exit socket (6) and in the tapping socket (4) lead into the flow channel (30) and, like the flow channel (30), are surrounded by the heating coil (14).

6. A tapping fitting according to one of Claims 1 to 5, characterized in that, as seen in the direction (37) of flow of the medium flowing through the pipe (10), the exit socket (6) is arranged downstream of the tapping socket (4).

7. A tapping fitting according to one of Claims 1 to 6, characterized in that, between the mutually facing external faces of the tapping socket (4) and the exit socket (6), in the region which merges into the outer surface (52) of the connecting piece (34), there is a spacing having a predetermined length (54) which is preferably predetermined such that the exit line which may be connected to the exit socket (6) may be brought to abut against the outer surface (52) of the connecting piece (34) by means of its axial end face.

8. A tapping fitting according to one of Claims 1 to 7, characterized in that, arranged in the merge region between the preferably axially extending flow channel (30) and the exit socket (6), there is at least one guide face (40, 41) which is arranged at a predetermined angle and/or obliquely with respect to the exit axis (32).

9. A tapping fitting according to one of Claims 1 to 8, characterized in that, in the region of the external face (36) of the tapping fitting and/or the saddle piece (2), the connecting piece (34) has a width (46) which is at least approximately the same size as the external diameter (48) of the tapping socket (4) and/or the external diameter (50) of the exit socket (6), the width (46) being measured transversely with respect to the longitudinal axis (10).

## Revendications

1. Appareil de perçage, qui peut être relié à un tube (10), comprenant un embout de perçage (4) pour un perçoir (22) destiné à percer le tube (10), un embout de sortie (6) pour le raccordement d'une conduite de sortie, et de plus un élément de jonction (34) avec un canal d'écoulement (30) entre l'embout de perçage (4) et l'embout de sortie (6), le canal d'écoulement (30) étant placé approximativement ou au moins en partie parallèlement à un axe longitudinal (12) qui, après l'assemblage avec le tube (10), coïncide au moins approximativement avec l'axe longitudinal du tube, caractérisé en ce que le canal d'écoulement (30) est réalisé sous la forme d'un renfoncement au niveau de la surface intérieure (8) de l'appareil de perçage et, après l'assemblage de l'appareil de perçage avec le tube (10), est limité à l'intérieur radialement au moins partiellement par la surface extérieure du tube (10), et en ce que le canal d'écoulement (30) est placé à l'intérieur d'un enroulement chauffant (14) au moyen duquel l'appareil de perçage peut être soudé sur la surface extérieure (11) du tube (10).

2. Appareil de perçage selon la Revendication 1, ***caractérisé en ce que*** l'axe d'embout (18) de l'embout de perçage (4) et l'axe d'embout (32) de l'embout de sortie (6) présentent dans la direction axiale une distance prédéterminée entre eux.

3. Appareil de perçage selon la Revendication 1 ou 2, ***caractérisé en ce que*** l'embout de perçage (4) et l'embout de sortie (6) sont placés avec leurs axes (18, 32) pour l'essentiel parallèles l'un à l'autre.

4. Appareil de perçage selon la Revendication 1 ou 2, ***caractérisé en ce que*** l'axe d'embout (18) de l'embout de perçage (4) et l'axe d'embout (32) de l'embout de sortie (6) sont placés pour l'essentiel dans le même plan, de préférence horizontal.

5. Appareil de perçage selon l'une des Revendications 1 à 4, ***caractérisé en ce que*** les espaces intérieurs creux de l'embout de sortie (6) et de l'embout de perçage (4) débouchent dans le canal d'écoulement (30) et, comme le canal d'écoulement (30), sont entourés par l'enroulement chauffant (14).

6. Appareil de perçage selon l'une des Revendications 1 à 5, ***caractérisé en ce que,*** dans la direction d'écoulement (37) du fluide s'écoulant dans le tube (10), l'embout de sortie (6) est placé après l'embout de perçage (4).

7. Appareil de perçage selon l'une des Revendications 1 à 6, ***caractérisé en ce qu'***entre les deux surfaces extérieures en vis-à-vis de l'embout de perçage (4) et de l'embout de sortie (6), dans la zone de transition avec la surface extérieure (52) de l'élément de jonction (34), est présente une distance de longueur (54) prédéterminée, qui est imposée de préférence de telle manière que la conduite de sortie pouvant être raccordée à l'embout de sortie (6) peut être amenée avec sa surface frontale axiale en appui contre la surface extérieure (52) de l'élément de jonction (34).

8. Appareil de perçage selon l'une des Revendications 1 à 7, ***caractérisé en ce que,*** dans la zone de transition entre le canal d'écoulement (30) d'extension de préférence axiale et l'embout de sortie (6), est placée au moins une surface directrice (40, 41) qui est placée selon un angle prédéterminé et/ou à l'oblique par rapport à l'axe de sortie (32).

9. Appareil de perçage selon l'une des Revendications 1 à 8, ***caractérisé en ce que*** l'élément de jonction (34) présente au niveau de la surface extérieure (36) de l'appareil de perçage et/ou de la selle (2), une largeur (48) qui est au moins approximativement égale au diamètre extérieur (48) de l'embout de perçage (4) et/ou au diamètre extérieur (50) de l'embout de sortie (6), la largeur (46) étant mesurée transversalement à l'axe longitudinal (10).
